Europäisches Patentamt

European Patent Office

Office européen des brevets

(11) Veröffentlichungsnummer: **0 303 102 B1**

(12) **EUROPÄISCHE PATENTSCHRIFT**

(45) Veröffentlichungstag der Patentschrift: **03.06.92**

(51) Int. Cl.⁵: **F16J 15/10, B64C 1/14**

(21) Anmeldenummer: **88112064.6**

(22) Anmeldetag: **26.07.88**

(54) **Dichtband.**

(30) Priorität: **12.08.87 DE 3726853**

(43) Veröffentlichungstag der Anmeldung:
**15.02.89 Patentblatt 89/07**

(45) Bekanntmachung des Hinweises auf die
Patenterteilung:
**03.06.92 Patentblatt 92/23**

(84) Benannte Vertragsstaaten:
**AT BE CH DE ES FR GB GR IT LI LU NL SE**

(56) Entgegenhaltungen:
**DE-A- 2 919 958**
**FR-A- 979 525**
**US-A- 2 895 759**

(73) Patentinhaber: **W.L. Gore & Associates GmbH**
**Hermann-Oberth-Strasse 22**
**W-8011 Putzbrunn(DE)**

(72) Erfinder: **Forrest, Patrick**
**Lindenstrasse 15**
**W-8832 Weissenburg(DE)**
Erfinder: **Tillmanns, Ralf**
**Am Einsiedel 44**
**W-8835 Pleinfeld(DE)**
Erfinder: **Walter, Wolfgang**
**Sonnbergstrasse 14**
**W-8000 München 80(DE)**

(74) Vertreter: **Klunker . Schmitt-Nilson . Hirsch**
**Winzererstrasse 106**
**W-8000 München 40(DE)**

## Beschreibung

Die Erfindung betrifft ein Dichtband zum Abdichten der Fugen und Spalten zwischen dem Rand einer Öffnung in einem Flugzeugrumpf und dem die Öffnung verschließenden Deckel, bestehend aus einer in ein Flachband eingeschlagenen Dichtschnur. Außerdem betrifft die Erfindung ein Verfahren zum Herstellen eines solchen Dichtbandes.

Damit die in einem Flugzeugrumpf aufgenommenen Teile wie Instrumente, Mechanismen, Leitungen und dergleichen für Wartungs- und Reparaturarbeiten, wenn nicht von innen her, so doch von außen zugänglich sind, werden in dem Flugzeugrumpf üblicherweise mehrere Öffnungen vorgesehen, die vor Inbetriebnahme des Flugzeugs von passenden Deckeln verschlossen werden. Selbstverständlich müssen die Öffnungen wasserdicht verschlossen werden. Dazu verwendet man bislang sogenannte Selbstformdichtungen, das sind Zwei-Komponenten-Dichtungen, die angemischt und dann sehr dünn auf die Dichtfläche aufgetragen werden, bevor der Deckel angeschraubt oder anderweitig festgezogen wird.

Zur Prüfung der Dichtigkeit wird das Ausreagieren der Dichtmasse abgewartet, bevor das Flugzeug zum Beispiel mit einer Berieselungsanlage auf Dichtigkeit geprüft wird. Werden Undichtigkeiten festgestellt, muß der betreffende Deckel wieder abgeschraubt, die Dichtmasse entfernt und der Dichtungsvorgang wiederholt werden. Das Ausreagieren der Dichtungsmasse benötigt etwa 12 Stunden. Es ist ersichtlich, daß das Abdichten der Öffnungen äußerst zeitraubend ist. Störend ist vor allem, daß die Dichtungen nicht von gleichbleibender Qualität sind.

Unproblematisch ist auch nicht die Behandlung der alten Dichtungen; denn diese müssen als Sondermüll behandelt werden.

In der US-A- 2 859 759 ist gemäß Oberbegriff des Anspruchs 1 ein für den Flugzeugbau vorgesehenes Dichtband beschrieben, bei dem das Flachband und die Dichtschnur aus Glasfasermaterial bestehen. Nachdem die Dichtschnur in das Flachband eingeschlagen ist, wird das so erhaltene Dichtband mit PTFE getränkt und dann ausgehärtet, so daß die aufeinanderliegenden Hälften des Flachbandes aneinander haften. Als besondere Eigenschaften dieses Dichtbandes werden eine besonders hohe Lebensdauer sowie der Umstand hervorgehoben, daß das mit PTFE imprägnierte Glasfasermaterial unempfindlich gegenüber Brennstoff oder Öl ist und hohen Temperaturen standzuhalten vermag. Das Imprägnieren mit PTFE (Handelsbezeichnung: Teflon) ergibt eine kurzfristige Flammbeständigkeit für Temperaturen von mehr als 1000°C. Deshalb eignet sich die bekannte Dichtung speziell für Brandwände.

Aus der DE-A- 29 19 958 ist eine speziell als Flanschdichtung ausgebildete Dichtung mit einem Flachbandteil und einem verdickten Wulstteil bekannt, wobei Flachteil und Wulstteil aus verschiedenen Stoffen hergestellt sind. Als mögliche Werkstoffkombination sind Elastomere mit Kunststoffen, z. B. PTFE, angegeben.

Der Erfindung liegt die Aufgabe zugrunde, ein Dichtband der eingangs genannten Art zu schaffen, welches bei billiger Herstellung gute Dichtungseigenschaften besitzt, sich rasch verarbeiten läßt, als Abfallprodukt keine Probleme aufwirft und insbesondere auch bei unregelmäßigen Lücken und Spalten zwischen Öffnungsrand und Deckelrand überall eine gleichmäßige Abdichtung gewährleistet.

Gelöst wird diese Aufgabe erfindungsgemäß dadurch, daß die Dichtschnur und das Flachband aus expandiertem PTFE bestehen.

Entgegen dem oben erläuterten bekannten Dichtband dient das PTFE-Material nicht zum Imprägnieren von Glasfasermaterial, sondern Flachband und Dichtschnur bestehen beide vollständig aus expandiertem PTFE. Dadurch besitzt das Dichtband nicht nur gute Dichtungseigenschaften, sondern weist relativ hohe Kompressibilität auf, so daß auch unregelmäßig breite Lücken und Spalte zwischen Öffnungsrand und Deckelrand gleichmäßig abgedichtet werden können.

Dem förderlich ist ein kreisrunder Querschnitt der Dichtschnur, wenngleich sich in gewissen Fällen (beispielsweise abhängig von der jeweiligen Deckelform) auch andere Querschnitte empfehlen können, z. B. elliptische Querschnitte.

Um die Dichtschnur in dem Flachband zu fixieren, sieht die Erfindung vor, daß die Dichtschnur entlang der Längsmittellinie des Flachbands verläuft, der mittlere Bereich des Flachbandes die Dichtschnur praktisch vollständig umschließt und die äußeren Randbereiche des Flachbands flächig aufeinanderliegen, wobei die Längsseitenkanten bündig sind. Dabei sind die flächig aufeinanderliegenden Bereiche des Flachbands miteinander verschweißt oder anderweitig verbunden. Die Dichtschnur kann somit innerhalb des Flachbands praktisch nicht verrutschen. Zur leichten Anbringung des Dichtbands auch in kompliziert geformten Bereichen empfiehlt es sich, auf einer Seite des Dichtbandes im Bereich der aufeinanderliegenden Flachbandabschnitte ein oder mehrere Selbstklebebänder vorzusehen.

Mit dem erfindungsgemäßen Dichtband können Öffnungen in kurzer Zeit mit Dichtungen ausgestattet werden. Die Dekkel-Befestigungsmittel, zum Beispiel Schrauben, können mühelos eingeschraubt werden. Dazu wird das Dichtband an den betreffenden Bohrungs-Stellen einfach mit einem spitzen Werkzeug durchstochen. Das expandierte PTFE legt sich an die Schraube an und gewährleistet auch an diesen empfindlichen Stellen Dichtigkeit.

Das erfindungsgemäße Dichtband läßt sich sehr einfach herstellen. Die Erfindung sieht dazu ein Verfahren vor bei dem in das PTFE-Flachband mittig die PTFE-Dichtschnur eingelegt wird, eine Hälfte des Flachbands um die Dichtschnur auf die andere Flachbandhälfte gefaltet wird und die aufeinanderliegenden Flachbandabschnitte miteinander verschweißt oder verklebt werden.

Im folgenden wird ein Ausführungsbeispiel der Erfindung anhand der Zeichnung näher erläutert. Es zeigen:

Fig. 1    eine Querschnittansicht eines Dichtbands,

Fig. 2    eine Draufsicht auf das Dichtband nach Fig. 1, und

Fig. 3    einen Randbereich einer von einem Deckel abgedichtet verschlossenen Öffnung in einem Flugzeugrumpf.

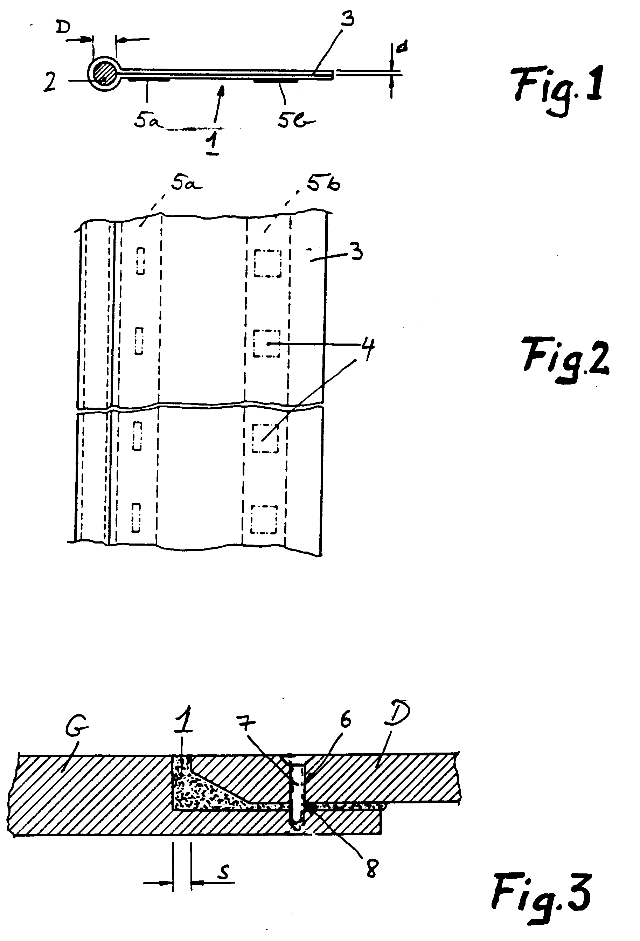

Nach den Figuren 1 und 2 ist in ein Flachband aus expandiertem PTFE, 3, eine ebenfalls aus expandiertem PTFE bestehende Dichtschnur 2 so eingeschlagen, daß die Dichtschnur 2 entlang der Längsmittellinie des Flachbands 3 verläuft, das Flachband 3 die Dichtschnur 2 vollständig umschließt, die beiden Längshälften des Flachbands 3 flächig aufeinanderliegen, und die Längsseitenkanten des Flachbands 3 bündig sind.

Damit die Dichtschnur 2 verrutschfrei in dem Flachband 3 gehalten wird, ist letzteres an mehreren Stellen 4a, 4b (siehe Fig. 2) verschweißt oder verklebt.

Auf der einen Seite des Dichtbandes 1 sind zwei Selbstklebebänder 5a, 5b vorgesehen, mit denen das Dichtband in einem abzudichtenden Bereich festgeklebt wird.

Der kreisförmige Durchmesser der Dichtschnur 2 beträgt zum Beispiel 5 mm während die Dicke d des Flachbands 3 0,4 mm beträgt. Es sind auch davon abweichende Abmessungen möglich, das Flachband kann zum Beispiel dicker oder dünner sein, während die Dichtschnur ebenfalls in den Abmessungen variieren kann.

Wie Fig. 3 zeigt, wird die Öffnung eines Flugzeugrumpfs G von einem Deckel D verschlossen, wobei der Rand des Deckels in einigem Abstand vom Öffnungsrand des Flugzeugrumpfs G beabstandet ist und so mit einer in der Bohrung 6 des Deckels sitzenden Schraube 7 befestigt ist, das die Außenseite des Flugzeugrumpfs G mit der Außenseite des Deckels D fluchtet. In dem Spalt zwischen Deckelrand und Öffnungsrand befindet sich das Dichtband 1, welches auf Grund seiner besonderen Eigenschaften seine Form so verändert, daß das Dichtband die Lücke zwischen Deckelrand und Öffnungsrand vollständig ausfüllt.

Die Breite S des Spalts unterliegt Schwankungen, denen sich das Dichtband gut anpaßt. Die in eine Bohrung 9 im Öffnungsrand eingreifende Schraube 7 durchsetzt ein Loch 8 des Dichtbands 1. Das Loch 8 wird nach dem Anbringen des Dichtbands am Öffnungsrand mit einem spitzen Werkzeug geschaffen, indem das Dichtband einfach durchstoßen wird.

Herstellungsbedingt besitzt das aus PTFE bestehende Dichtband 1 besondere Dehnungfähigkeit und eine besondere Zugfestigkeit, wodurch das Dichtband besonders gute Dichtungseigenschaft aufweist.

Das PTFE-Flachband wird ebenso wie die PTFE-Dichtschnur bei der Herstellung in Längsrichtung gewalzt. Das Band besitzt längs zur Walzrichtung eine Dehnung von mehr als 50 %, quer zur Walzrichtung eine Dehnung von mehr als 500 %. Die Zugfestigkeit beträgt längs zur Walzrichtung mehr als 200 N/cm$^2$ quer zur Walzrichtung mehr als 20 N/cm$^2$.

Bei der Dichtschnur aus expandiertem PTFE (Gore-Tex-Dichtschnur) beträgt die Dehnung mehr als 50 %, die Reißkraft mehr als 200 N/cm$^2$.

Die mittlere Dichte des Dichtbandes, bestehend aus Dichtschnur und Flachband, beträgt mehr als 0,35 g/cm$^3$.

Das Dichtband 1 wird in einem kontinuierlichen Herstellungsverfahren hergestellt. Dazu wird die Dichtschnur 1 im Bereich der Längsmittellinie des Flachbands 2 zugeführt und gleichsam in das Flachband eingelegt. Im weiteren Verlauf wird die eine Hälfte des Flachbands 3 umgeklappt, d.h. auf die andere Hälfte geschlagen, durch geeignete Formstücke wird das Flachband fest gegen die Außenfläche der Dichtschnur 2 gedrückt. Stellenweise werden die aufeinanderliegenden Abschnitte miteinander verschweißt. Anschließend oder vorher werden die Selbstklebebänder 5a und 5b angebracht.

Der erfindungsgemäß verwendete Werkstoff PTFE hat im vorliegenden Anwendungsfall, also beim Abdichten der Spalten und Fugen zwischen Öffnungen und Deckeln von Flugzeugrümpfen, den Vorteil, daß auf Grund seiner absoluten Chemikalienbeständigkeit weder Flugzeugbenzin (Kerosin) noch agressive Säuren und Öle, wie sie üblicherweise in der Flugzeughydraulik verwendet werden, die Dichtung angreifen können.

Die speziellen mechanischen Eigenschaften der erfindungsgemäßen PTFE-Dichtung sind sowohl im Tieftemperaturbereich (-200° C) wie auch im Hochtemperaturbereich (bis +260° C) gegeben sind. Damit ist die erfindungsgemäße Dichtung in sämtlichen in Frage kommenden Temperaturbereichen zuverlässig.

Die erfindungsgemäße PTFE-Dichtung ist absolut witterungs- und UV-Licht-beständig, so daß eine praktisch unbegrenzte Lebensdauer gewährleistet ist, wenn die Dichtung nicht mechanisch beschädigt wird.

**Patentansprüche**

1. Dichtband zum Abdichten der Fugen und Spalten zwischen dem Rand einer Öffnung in einem Flugzeugrumpf und dem die Öffnung verschließenden Deckel, bestehend aus einer in ein Flachband (3) eingeschlagenen Dichtschnur (2),
dadurch **gekennzeichnet,**
daß die Dichtschnur (2) und das Flachband (3) aus expandiertem PTFE bestehen.

2. Dichtband nach Anspruch 1,
dadurch **gekennzeichnet,**
daß die Dichtschnur einen elliptischen, quadratischen, rechteckigen oder, vorzugsweise, einen kreisförmigen Querschnitt hat.

3. Dichtband nach Anspruch 1 und 2,
dadurch **gekennzeichnet,**
daß die Dichtschnur entlang der Längsmittellinie des Flachbands (3) verläuft, der mittlere Bereich des Flachbands (2) die Dichtschnur (2) praktisch vollständig umschließt und die äußeren Randbereiche des Flachbands (3) flächig aufeinanderliegen, wobei die Längsseitenkanten bündig sind.

4. Dichtband nach Anspruch 3,
dadurch **gekennzeichnet,**
daß die flächig aufeinanderliegenden Bereiche des Flachbands (3) stellenweise miteinander verschweißt oder verklebt sind.

5. Dichtband nach einem der Ansprüche 1 bis 4,
dadurch **gekennzeichnet,**
daß auf einer Seite des Dichtbands (1) im Bereich der aufeinanderliegenden Flachbandabschnitte ein oder mehrere Selbstklebebänder (5a, 5b) vorgesehen sind.

6. Verfahren zum Herstellen eines Dichtbands nach einem der Ansprüche 1 bis 6,
dadurch **gekennzeichnet,**
daß in das PTFE-Flachband (3) mittig die PTFE-Dichtschnur (2) eingelegt wird, daß die Hälfte des Flachbands um die Dichtschnur (2) auf die andere Flachbandhälfte gefaltet wird, und daß die aufeinanderliegenden Flachbandhälften miteinander verschweißt oder verklebt werden.

**Claims**

1. Sealing strip for sealing the joints and fissures between the edge of an opening in an aircraft fuselage and the lid closing the opening, comprising a sealing cord (2) which is enclosed in a flat strip (3), characterized in that the sealing cord (2) and the flat strip (3) are of expanded PTFE.

2. Sealing strip according to Claim 1, characterized in that the sealing cord has an elliptical, square, rectangular or, preferably, circular cross-section.

3. Sealing strip according to Claim 1 and 2, characterized in that the sealing cord runs along the longitudinal centre line of the flat strip (3), the central region of the flat strip (3) surrounding the sealing cord (2) practically completely and the outer edge regions of the flat strip (3) lying flat on top of one another, the longitudinal side edges being flush.

4. Sealing strip according to Claim 3, characterized in that the regions of the flat strip (3) lying flat on top of one another are fused or bonded to one another at certain points.

5. Sealing strip according to one of Claims 1 to 4, characterized in that one or more self-adhesive strips (5a, 5b) are provided on one side of the sealing strip (1) in the region of the flat strip sections lying on top of one another.

6. Method of producing a sealing strip according to one of Claims 1 to 6, characterized in that the PTFE sealing cord (2) is laid in the centre of the PTFE flat strip (3), in that half of the flat strip is folded around the sealing cord (2) to the other flat strip half, and in that the flat strip halves lying on top of one another are fused or bonded to one another.

**Revendications**

1. Bande étanche destinée à étanchéifier des joints et fentes entre le bord d'un orifice ménagé dans un fuselage d'avion et le couvercle obturant l'orifice, composée d'une corde d'étanchéité (2) enveloppée dans une bande plate (3), caractérisée en ce que la corde d'étanchéité (2) et la bande plate (3) sont en PTFE expansé.

2. Bande étanche selon la revendication 1, caractérisée en ce que la corde d'étanchéité a une section transversale elliptique, carrée, rectangulaire, ou, de préférence, circulaire.

3. Bande étanche selon les revendications 1 et 2, caractérisée en ce que la corde d'étanchéité s'étend le long de l'axe longitudinal médian de la bande plate (3), que la zone centrale de la bande plate (3) enveloppe pratiquement totalement la corde d'étanchéité (2) et que les surfaces des zones des bords externes de la bande plate (3) sont superposées, les arêtes des grands côtés étant bord à bord.

4. Bande étanche selon la revendication 3, caractérisée en ce que les zones de la bande plate (3) dont les surfaces sont superposées sont soudées ou collées l'une à l'autre par places.

5. Bande étanche selon l'une des revendications 1 à 4, caractérisée en ce qu'une ou plusieurs bandes autocollantes 5a, 5b sont prévues sur une face de la bande étanche (1) dans la région des tronçons superposés de la bande plate.

6. Procédé de fabrication d'une bande étanche selon l'une des revendications 1 à 5, caractérisé en ce que la corde d'étanchéité en PTFE (2) est placée au centre de la bande plate en PTFE (3), que la moitié de la bande plate est repliée par desssus la corde d'étanchéité (2) sur l'autre moitié de la bande plate et que les moitiés superposées de la bande plate sont soudées ou collées l'une à l'autre.

Fig.1

Fig.2

Fig.3